# EUROPEAN PATENT APPLICATION

(11) **EP 4 629 187 A1**
(43) Date of publication of application: **08.10.2025**
(21) Application number: 24305516.7
(22) Date of filing: 03.04.2024
(51) Int. Cl.: G06V 10/74, G06V 40/12, G06V 40/40

(54) **PRESENTATION ATTACK DETECTION BASED ON A SET OF BIOMETRICS**

(71) Applicant: THALES DIS FRANCE SAS, 92190 Meudon (FR)
(72) Inventor: MATKOWSKI, Wojciech Michal, 69221 Dossenheim (DE); DANG, Thi Tra Giang, 140051 Singapore (SG); PATTRA, Surya, 151077 Singapore (SG)
(74) Representative: Quintero Romero, Manuel

(57) **Abstract**

The invention provides a presentation attack detection method comprising:
- obtaining (300) a set of N biometrics, N being an integer equal to or greater than 2;
- for each biometric of the set, extracting (301) at least one feature of the biometric;
- determining (302) at least one relationship value for the set of N biometrics by applying a comparison function to the extracted features;
- determining (303) a relationship score based on the at least one relationship value, the relationship score being representative of a genetical relationship between the biometrics of the set;
- determining (304) a first classification of the set of N biometrics based on the obtained relationship score, the first classification indicating that the set of N biometrics is genuine or that the set of N biometrics is a presentation attack.

## Description

### TECHNICAL FIELD

This invention is related to presentation attack detection based on a set of biometrics, in particular, while not exclusively, based on a set of fingerprints.

### BACKGROUND OF THE INVENTION

More and more applications and services implement a prior step of identification or authentication based on fingerprints, to ensure that a user is authorized to use a resource such as a service/application.

This is the case for example in the domain of telecommunications, when unlocking a phone for example, when accessing to a physical place, for example in airports, in biometric systems for identity verification or in digital identification, for example for banking services.

Some applications require presentation of several biometrics, such as several fingerprints of several fingers of a same hand (such as four fingers of the right hand), or two fingers from the two hands (such as the right thumb and the left thumb), or several biometrics other than fingerprints.

To access services/applications of the genuine person, attackers may implement Presentation Attacks, noted PAs hereafter. PAs may consist in presenting a fake biometric or several fake biometrics.

To counteract these PAs, Presentation Attack Detection, PAD, methods and systems have been developed and are applied before identification or authentication, to ensure that the set of biometrics that are subjected to recognition are genuine, and not spoof/attack.

Some known PAD systems are based on a classification of each single biometric of a set of biometrics submitted for identification or authentication, for example when several fingerprints of different fingers are submitted. A classification as "genuine" or "fake" is therefore obtained for each submitted single biometric of a set of several biometrics. These PAD systems are robust for low and medium quality PAs, for example when one or several of the submitted biometrics is or are a poor quality or medium quality fake.

However, these PAD systems show some limitations in the following cases:
- if at least one of the submitted biometrics is a fake of high quality, carefully drafted, and that looks like a genuine one. In that case, the fake biometric may be erroneously classified as genuine;
- if the capture includes several biometrics that are all genuine but coming from at least two different people. In that case, each single biometric is correctly identified as genuine, but the PAD system is not able to detect that the biometrics come from different people;
- if the capture includes several biometrics that are identical (whereas only different biometrics are requested). In that case, each single biometric is correctly identified as genuine, but the PAD system is not able to detect that two biometrics are identical.

Therefore, there is a need for PAD method and device that are able to detect PAD in at least one of the above identified three situations, and preferably for these three situations.

### SUMMARY OF THE INVENTION

The present invention provides a solution for the aforementioned problems by a presentation attack detection method according to claim 1, a computer program according to claim 10, and a presentation attack detection device according to claim 11. In dependent claims, preferred embodiments of the invention are defined.

In a first inventive aspect, the invention provides a presentation attack detection method comprising:
- obtaining a set of N biometrics, N being an integer equal to or greater than 2;
- for each biometric of the set, extracting at least one feature of the biometric;
- determining at least one relationship value for the set of N biometrics by applying a comparison function to the extracted features;
- determining a relationship score based on the at least one relationship value, the relationship score being representative of a genetical relationship between the biometrics of the set;
- determining a first classification of the set of N biometrics based on the obtained relationship score, the first classification indicating that the set of N biometrics is genuine or that the set of N biometrics is a presentation attack.

Compared to PAD methods that are based on individual analyses of single fingerprints, the invention allows to detect presentation attacks for which two different people submit different biometrics to an authentication or identification system, which is not possible with the techniques of the prior art. In addition, the same method according to the invention enables to detect PAD that are based on one or several fake biometrics, including high quality ones, as it will be detected as being genetically unrelated with genuine biometrics of the user trying to authenticate or identify with the system. Also, the comparison function allows to detect the case where two identical biometrics (or more) are submitted in the set.

According to some embodiments, the method may further comprise:
- determining, for each biometric of the set, a second classification indicating whether the biometric is genuine or fake;
- determining a decision based on the first classification and the N classifications, the decision comprising at least a final classification indicating that the set of N biometrics is genuine or that the set of N biometrics is a presentation attack.

This allows to combine the advantages of a single fingerprint classification with a fingerprint set classification according to the invention. Compared to PAD methods of the prior art which are based exclusively on a single fingerprint classification module, this embodiment allows to improve the APCER (Attack Presentation Classification Error Rate) without increasing the BPCER (Bona fide Presentation Classification Error Rate) of the PAD.

According to some embodiments, N is greater than 2 and a relationship value may be determined for each subset of M biometrics in the set of biometrics, M being comprised between 2 and N-1, based on the features extracted for the biometrics of the subset.

Therefore, the relationship score is determined based on every possible combination of M biometrics among the set of N biometrics, which makes the PAD method more robust.

In complement, for each subset of M biometrics, the relationship value may be determined by applying a comparison function to the features extracted for the biometrics of the subset.

The same function is therefore applied to determine each relationship value, which facilitates the computation of the relationship values, and therefore of the first classification.

According to some embodiments, the first classification may be determined based on a comparison between the relationship score and a first threshold.

This enables to adjust the performance of the PAD method, in terms of trade-off between APCER and BPCER, when defining the first threshold.

According to some embodiments, the set of N biometrics comprises N fingerprints.

This PAD method is particularly fitted for identification or authentication systems that are based on several fingerprints of different fingers, because the different biometrics are of a same type in that case, so that the computation of the relationship values is simplified. In addition, it makes the method compatible with many identification and authentication systems.

In complement, the set of N biometrics may comprise N fingerprints of different fingers of a same hand.

Therefore, N can be more than 2, for example equal to 3, 4, or 5, which makes the PAD method compatible with complex identification and authentication systems.

Alternatively, N may be equal to 2 and the set of N biometrics may comprise a fingerprint of a right finger and a fingerprint of a corresponding left finger.

Therefore, the PAD method is compatible with identification and authentication systems having several fingerprints readers, one for each hand, for example for capturing fingerprints of the right and left thumbs.

In complement, the at least one feature extracted for each fingerprint may comprise one or several of the following features:
- a color feature derived from a color histogram;
- an image quality feature;
- an information derived from ridges of the fingerprint;
- at least one texture feature among local binary pattern (LBP), Gabor features, deep features, gray-level co-occurrence matrices (GLCM), and/or other texture features.

These features enable to compute relationship values that enable to distinguish between genetically unrelated fingerprints and genetically related fingerprints.

A second aspect of the invention concerns a computer program comprising instructions arranged for implementing the method according to the first aspect of the invention, when said instructions are executed by a processor.

A third aspect of the invention concerns a presentation attack detection device comprising a fingerprint set classification module with at least one processor for:
- obtaining a set of N biometrics, N being an integer equal to or greater than 2;
- for each biometric of the set, extracting at least one feature of the biometric;
- determining at least one relationship value for the set of N biometrics by applying a comparison function to the extracted features;
- determining a relationship score based on the at least one relationship value, the relationship score being representative of a genetical relationship between the biometrics of the set;
- determining a first classification of the set of N biometrics based on the obtained relationship score, the first classification indicating that the set of N biometrics is genuine or that the set of N biometrics is a presentation attack.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

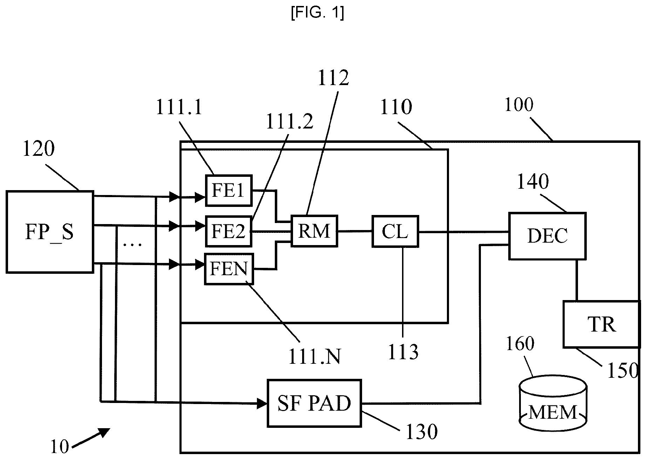

- Figure 1: This figure shows a PAD system according to some embodiments of the invention.
- Figure 2: This figure shows the fingers of two hands of two different people.
- Figure 3: This figure shows the steps of a presentation attack detection method according to some embodiments of the invention.

### DETAILED DESCRIPTION OF THE INVENTION

As it will be appreciated by one skilled in the art, aspects of the present invention may be embodied as a PAD method, system, or computer program.

The PAD system 10 comprises a biometrics capture device 120 arranged to capture a set of N biometrics, such as a set of N fingerprints from different fingers of a person to be identified or authenticated. N is an integer greater than or equal to 2. No restriction is attached to the N biometrics that are captured by the biometrics capture device 120, which can be any combination of different biometrics that can be captured on a person to be identified or authenticated.

In what follows, for illustrative purposes, it is considered that the N biometrics are N fingerprints captured on N fingers. However, the invention is not restricted to this example, and applies to any combination of N biometrics that can be captured on a single person.

In that embodiment, the biometrics capture device 120 comprises at least one fingerprint reader and is called fingerprint capture device 120 in what follows.

The fingerprint capture device 120 is arranged to capture fingerprints for at least two fingers. For example, the fingerprint capture device 120:
- comprises a unique fingerprint reader arranged for capturing, at the same time (or during a same capture period), a plurality of fingerprints of fingers of a same hand, such as two, three or four fingers of a given hand. For example, the unique fingerprint reader is arranged to obtain a capture representing four fingerprints of four fingers of the right hand, such as the index finger, the middle finger, the ring finger and the little finger for example;
- comprises a unique fingerprint reader arranged for capturing, at the same time (or during a same capture period), a plurality of fingerprints of fingers of two hands, such as a finger of the right hand and a finger of the left hand, or several fingers from the right hand and several fingers from the left hand. For example, the unique fingerprint reader may be arranged for obtaining a capture of the right thumb and of the left thumb;
- comprises two fingerprint readers arranged for capturing, simultaneously (or during a same capture period) or sequentially, a plurality of fingerprints of fingers from two hands. For example, the two fingerprint readers are arranged for obtaining a first capture of a fingerprint of a right thumb and a second capture of a fingerprint of a left thumb.

The PAD system 10 according to the invention further comprises a PAD device 100, that is configured to:
- receive a set of N fingerprints of different fingers, N being an integer equal to or greater than 2, from the fingerprint capture device 120;
- output a decision comprising at least a final classification indicating whether the received set of N fingerprints is genuine or a presentation attack.

The fingerprint capture device 120 is arranged to communicate the set of N fingerprints to the PAD device 100.

No restriction is attached to the communication link between the fingerprint capture device 120 and the PAD device 100. The communication link can for example be a wireless link, or a wired link. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

Alternatively, the PAD device 100 integrates the fingerprint capture device 120.

The PAD device 100 according to the invention comprises a biometrics set classification module 110, which is configured to:
- receive the set of N biometrics, such as N fingerprints of different fingers, from the fingerprint capture device 120;
- determine a first classification of the set of N biometrics, the first classification indicating a first category "genuine" if the set of N biometrics is classified as genuine, or "presentation attack" if the set of N biometrics is classified as a presentation attack.

The biometrics set classification module 110 is named fingerprint set classification device in what follows, because an example with fingerprints is considered for illustrative purposes.

According to the invention, the fingerprint set classification module 110 is arranged to determine the first classification after determining a relationship score that is representative of the genetical relationship between the fingerprints of the set.

To determine the relationship score, and therefore the first classification, the fingerprint set classification module 110 comprises N feature extraction modules 111.1-111.N. Each feature extraction module is arranged to receive one fingerprint, of index i, from the set of N fingerprints communicated by the fingerprint capture device 120, i varying between 1 and N, and to extract at least one fingerprint feature for the fingerprint of index i.

No restriction is attached to the at least one feature extracted for each fingerprint. The at least one feature may comprise a plurality of fingerprint features in the form of a feature vector.

For example, the at least one feature may comprise one or several of the following features:
- a color feature derived from a color histogram, which represents the frequency distribution of color bins in an image, such as the capture of a fingerprint;
- an image quality feature, such as NFIQ2, which stands for NIST Fingerprint Image Quality 2;
- at least one texture feature among local binary pattern (LBP), Gabor features, deep features, gray-level co-occurrence matrices (GLCM); and/or
- any other information derived from the fingerprint, for example derived from ridges of the fingerprint.

The invention relies on the hypothesis that the relationships between respective features of fingerprints of a same individual (so which are genetically identical) are different than the relationships between respective features of genetically unrelated fingerprints (such as fingerprints of two different users, or a fingerprint from a first user and a fake fingerprint). This hypothesis has been experimentally verified on a set of biometrics and it shows that the distribution of relationships values derived from features of genetically identical biometric multiplets (a set of fingerprints for example) is different than the distribution of relationship values derived from features of genetically unrelated ones.

According to the invention, relationship values representative of the relationships between the features of fingerprints captured by the fingerprint capture device 120 are evaluated by the relationship module 112. The relationship values may be evaluated based on a comparison function, configured for receiving features of several fingerprints as inputs.

In particular, according to some embodiments of the invention, the relationship module 112 may evaluate, for each subset of M fingerprints of the capture, M being comprised between 2 and N-1 when N is greater than 2, or being equal to N when N is equal to 2, at least one relationship value between the respective features of the fingerprints of the subset based on a comparison function taking as inputs the features of the fingerprints of the subset. The at least one relationship value can be a scalar, or can be a vector (for example when several features are extracted for each fingerprint by the feature extraction modules 111.1-111. N in the form of a feature vector).

A comparison function encompasses any function that can receive several parameters as inputs, and outputs a value that is representative of a similarity (or dissimilarity) between the parameters. The comparison function may for example be a distance or similarity function, such as the Euclidean distance function, Chi square distance, correlation coefficient, cosine distance, Hamming distance, Mahalanobis distance, etc.

In what follows, for illustrative purposes only, it is considered that M is equal to 2, so that the comparison function is applied to a pair of biometrics. However, as explained above, other comparison functions may be applied to more than 2 biometrics, when M is greater than 2.

According to these embodiments, a pair-wise relationship value is therefore evaluated by the relationship module 112 for each pair of fingerprints, based on the respective features of the fingerprints of the pair.

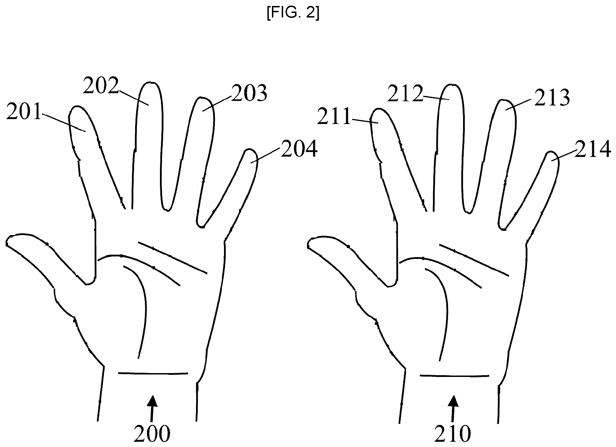

For example, referring the figure 2, there are shown two hands from different people, including a first right hand 200 of a first person and a second right hand 210 of second person. So, any fingerprint from the first hand 200 is genetically unrelated to any fingerprint from the second hand 210.

The first hand 200 comprises an index finger 201, a middle finger 202, a ring finger 203 and a little finger 204. For each of these fingers, a fingerprint can be captured, and a feature vector can be extracted by the respective feature extraction modules, such as:
- a feature vector x1 for the index finger 201;
- a feature vector x2 for the middle finger 202;
- a feature vector x3 for the ring finger 203;
- a feature vector x4 for the little finger 204.

The same applies to the second hand 210, comprising an index finger 211, a middle finger 212, a ring finger 203 and a little finger 204, for which the following feature vectors can be extracted by the respective feature extraction modules:
- a feature vector x'1 for the index finger 211;
- a feature vector x'2 for the middle finger 212;
- a feature vector x'3 for the ring finger 213;
- a feature vector x'4 for the little finger 214.

Assuming that the first person submits their right hand 210 to the fingerprint capture device 120, to capture a first set of fingerprints, comprising four fingerprints of fingers 201 to 204, which are genetically related, the feature vectors x1, x2, x3 and x4 are obtained by four feature extraction modules 111.1-111.N (N being equal to 4 in this example).

The relationship module 112 is configured to obtain the following relationship values, which are considered as distances in this specific example, given for illustrative purpose:
- D(x1 ;x2), which is a relationship value or a vector of relationship values, calculated for the pair x1 and x2;
- D(x1 ;x3), which is a relationship value or a vector of relationship values, calculated for the pair x1 and x3;
- D(x1;x4), which is a relationship value or a vector of relationship values, calculated for the pair x1 and x4;
- D(x2;x3), which is a relationship value or a vector of relationship values, calculated for the pair x2 and x3;
- D(x3;x4), which is a relationship value or a vector of relationship values, calculated for the pair x3 and x4.

In what follows, it is considered for illustrative purposes that D(x1;x2), D(x1;x3), D(x1;x4), D(x2;x3), D(x3;x4) are scalar relationship values.

The relationship values D(x1;x2), D(x1;x3), D(x1;x4), D(x2;x3), D(x3;x4) together form a first distribution of relationship values, obtained for the first set of fingerprints, which are genetically related, because captured on a unique person and because the fingerprints are all genuine.

In case of a presentation attack based on a cooperation between two different individuals (the first person and the second person), the first person submits only some of the fingers of their right hand, such as the index finger 201, the middle finger 202 and the little finger 204, while the second person places their ring finger 213 simultaneously on the fingerprint capture device 120. In that case, a second set of four fingerprints is obtained, the fingerprints being genetically unrelated. The four feature vectors x1, x2, x'3 and x4 are obtained by four feature extraction modules 111.1-111.N (N being equal to 4 in this example).

In the presentation attack case, the relationship module 112 is configured to obtain the following relationship values, also named distances:
- D(x1;x2), which is a relationship value or a vector of relationship values, calculated for the pair x1 and x2;
- D(x1;x'3), which is a relationship value or a vector of relationship values, calculated for the pair x1 and x'3;
- D(x1;x4), which is a relationship value or a vector of relationship values, calculated for the pair x1 and x4;
- D(x2;x'3), which is a relationship value or a vector of relationship values, calculated for the pair x2 and x'3;
- D(x'3;x4), which is a relationship value or a vector of relationship values, calculated on the pair x'3 and x4.

In what follows, it is considered for illustrative purposes that D(x1;x2), D(x1;x'3), D(x1;x4), D(x2;x'3), D(x'3;x4) are scalar relationship values.

The relationship values D(x1;x2), D(x1;x'3), D(x1;x4), D(x2;x'3), D(x'3;x4) together form a second distribution of relationship values, obtained for the second set of fingerprints, which are genetically unrelated.

In another presentation attack case, the attacker submits twice the same biometrics, for example twice the same fingerprints x1, so that the set x1, x1, x3 and x4 is captured (the second x1 may be a fake fingerprint that is identical to the real first x1 of the set). In that case, according to the invention, the relationship value D(x1; x1) is calculated and allows to detect an attack (for example, in case where D is a distance, D(x1; x1) is equal to 0 or is very close to 0).

According to the invention, the fingerprint set classification module 110 further comprises a classification module 113, which is configured to receive the relationship values determined by the relationship module 112, and to determine a relationship score, representative of whether the N fingerprints of the set are genetically related (all from the same individual) or not (if at least two fingerprints in the set are from different individuals), and if at least two fingerprints are identical.

It is to be noted that a set of fingerprints is genetically unrelated if at least one fingerprint of the set is not genetically related to at least one other fingerprint of the set: this encompasses a first presentation attack situation based on a cooperation of two different individuals (as described above for the second set of fingerprints) and also a second presentation attack situation in which a unique user uses one fake finger or several fake fingers.

The relationship score is determined by the classification module 113 based on the relationship values received from the relationship module 112. For example, the classification module 113 applies a score function which takes the relationship values as input values to output the relationship score.

The score function may be a weighted sum (or a weighted sum of the inverses of the relationship values), defined by predefined weights that are respectively associated with each of the relationship values (or with the inverse of the relationship values). For example, a first weight is applied to the relationship value (or to its inverse) determined for the pair comprising the fingerprint of the middle finger and the fingerprint index finger, whereas other weights are defined for the other pairs of fingerprints. This example is given for illustrative purpose: alternatively, the score function is a non-linear function.

The score function is determined in advance to differentiate between distributions of relationship values obtained for genetically unrelated fingerprints of a set (such as the first set of fingerprints described above), corresponding to a presentation attack, and relationship values obtained for genetically related fingerprints of a set (such as the second set of fingerprints), which is a genuine set of fingerprints. It is to be noted that the score function therefore depends:
- on the type of feature (or the types of features) that is extracted by the feature extraction modules 111.1-111.N; and
- on the comparison function that is applied by the relationship module 112 to determine the relationship values.

No restriction is attached to the scale of the relationship score, which may be comprised between 0 and 1, or expressed as percentages. The score function may be determined so that a high relationship score is determined for the genetically related set of fingerprints, and a low relationship score is determined for the genetically unrelated set of fingerprints.

According to the invention, the classification module 113 is further configured to output a first classification indicating a first category, named "genuine", if the set of fingerprints is classified as genuine, or a second category, named "presentation attack" if the set of fingerprints is classified as being a presentation attack.

To this end, the classification module 113 may compare the relationship score with a first threshold, which may be predefined. If the relationship score is higher than the first threshold, the first classification indicates the first category, whereas if the relationship score is less than the first threshold, the first classification indicates the second category.

Alternatively, the score function may be determined so that a high relationship score is determined for the genetically unrelated set of fingerprints, and a low relationship score is determined for the genetically related set of fingerprints. In that case, if the relationship score is lower than the first threshold, the first classification indicates the first category, whereas if the relationship score is higher than the first threshold, the first classification indicates the second category.

Also, according to some embodiments, if one of the relationship value indicates that two fingerprints are identical (for example a distance is equal to 0), the first classification indicates the second category.

According to another presentation attack case, all the biometrics that are captured are N fake biometrics of high quality, imitating a set of N real and different biometrics. In that case, although the corresponding N real biometrics are genetically related, the fake biometrics necessarily have some imperfections, which may increase over time: these discrepancies involve that the fake biometrics can be determined as genetically unrelated in the relationship score, and the presentation attack is detected.

The classification module 113 may be further configured to output, if the first classification indicates the second category, an identifier of the finger (or identifiers of several fingers) that is considered as being genetically different from the other fingers. This may for example be the finger which has the highest distances D with the other fingerprints.

The first classification, and the optional finger identifier, may be transmitted by the fingerprint set classification module 110:
- to the decision module 140, to be fused with other classifications (second classifications described below); or
- to a transmission interface 150 of the PAD device 100, which may transmit the first classification to an external entity. The external entity may for example decide to reject identification or authentication of the user if a presentation attack is detected, or may accept to perform identification or authentication of the user if the sets of fingerprints is considered as genuine, according to the first classification.

No restriction is attached to the transmission interface 150, which may be a wireless interface, or a wired interface. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC.

According to some embodiments of the invention, the PAD device 100 further comprises a single fingerprint classification module 130 that is arranged to receive the N fingerprints individually, one single fingerprint after the other, and to output second classification for each single fingerprint of the set, the second classification indicating the first category "genuine" if the received single fingerprint is classified as genuine, or indicating the second category "presentation attack" (or "fake" or "spoof", which is equivalent) if the received single fingerprint is classified as spoof or fake.

To this end, the single fingerprint classification module 130 may implement a single fingerprint classification model arranged to receive a single fingerprint (in the form of an image or a set of features) and to output a classification score for the single fingerprint, the score being representative of whether the single fingerprint is genuine or fake. The classification score can then be compared to a second threshold, which may be predetermined, to obtain the second classification.

No restriction is attached to the single fingerprint classification model, which may be an artificial neural network which parameters may be obtained by machine learning on a set of reference fingerprint data. For example, the single fingerprint classification model may be trained by supervised learning on a set of reference fingerprint data comprising single fingerprints labeled with the first category or with the second category.

Alternatively, the single fingerprint classification model may be based on clusters obtained by training the model on a set of single fingerprints labeled as genuine: features of genuine fingerprints are extracted, and clusters of these genuine features are then determined. Features of an input fingerprint can then be compared to the clusters of genuine features of the model to determine the classification score.

No restriction is attached to the single fingerprint classification model, which may implement any classification model other than the examples given above, such as classification models based on random forest, Support Vector Machine, decision tree, and so on.

Therefore, the single fingerprint classification module 130 obtains a set of N second classifications, each second classification being associated with one of the N fingerprints of the set received by the PAD device 100.

The N second classifications are transmitted by the single fingerprint classification module to the decision module 140 described above.

In this embodiment, the decision module 140 determines the decision comprising the final classification indicating whether the set of N fingerprints is genuine or a presentation attack, based on:
- the first classification received from the fingerprint set classification module 110, and optionally based on the finger identifier (or finger identifiers) mentioned above; and
- the N second classifications received from the single fingerprint classification module 130.

To this end, the decision module 140 may implement a fusion function configured for receiving the first classification and the N second classification, and to determine the final classification.

The fusion function may implement the following rules:
- if one of the first classification and N second classifications indicates the second category, the final classification indicates the second category (presentation attack);
- else, the final classification indicates the first category (genuine).

In addition to the final classification, when the final classification indicates the second category (presentation attack), the decision may comprise one or several finger identifiers identifying the finger or fingers considered as spoof, which may be:
- the finger identifier, if any, indicated by the fingerprint set classification module 110; and/or
- a finger identifier associated with each of the N second classifications indicating the second category "fake".

Alternatively, the fusion function may implement some more complex rules than those given above for illustrative purposes.

The decision module 140 may transmit the final decision to the transmission interface 150 of the PAD device 100, which may transmit the final decision to the external entity described above. The external entity may for example decide to reject identification or authentication of the user if a presentation attack is detected, or may accept to perform identification or authentication of the user if the sets of fingerprints is considered as genuine, according to the final classification.

Each of the modules 110, 130 and 140 may comprise one or several processors, such as one or multiple microprocessors, a Central Processing Unit (CPU), on a single Integrated Circuit (IC) or several IC chips.

The PAD device 100 further comprises at least one memory 160. No restriction is attached to the memory 160, which may be any non-transient, tangible form of memory. For example, it can comprise ROM, EEPROM and/or flash memory. Alternatively, each of the modules 110, 130 and 140 comprising a dedicated processor also comprises its own memory. The processor of each module may be programmable and may be configured to execute instructions that are stored in its internal memory or to execute instructions that are stored in the memory 160.

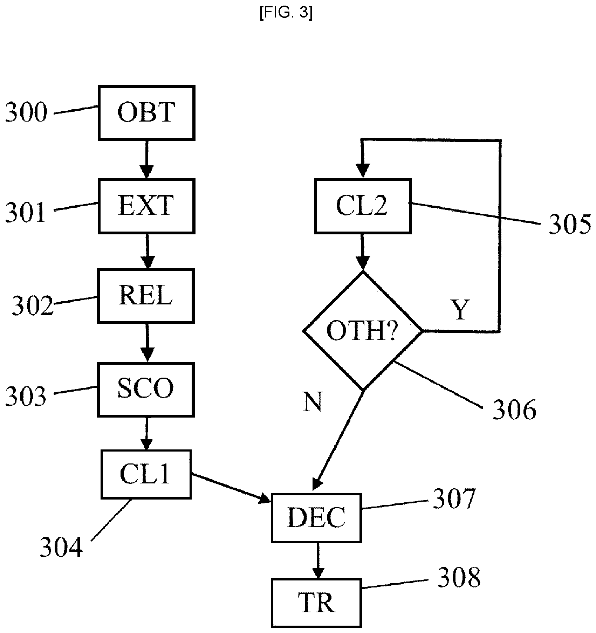

The memory 160 or the internal memories of the modules, can indeed store instructions for implementing steps 300 to 308 of the method described when referring to figure 3. In particular, the memory 160 or the internal memories may store the single fingerprint classification model (and the parameters of the model), the fusion function, the comparison function and the score function described above.

Alternatively, the processor of the PAD device 100, or each of the processors of the modules 110, 130 and 140, may comprise fixed-functionality hardware logic or configurable logic, configured to implement steps 300 to 308 of the method described when referring to figure 3.

The performance of a PAD device 100 is generally estimated based on two different indicators:
- APCER, which stands for "Attack Presentation Classification Error Rate", which is the percentage ratio at which input sets of fingerprints, corresponding to presentation attacks, are misidentified as a bone fide (genuine) set of fingerprints (the same applies for other biometrics);
- BPCER, which stands for "Bona fide Presentation Classification Error Rate", which is the percentage ratio at which bone fide (genuine) input sets of fingerprints are misidentified as a presentation attack set of fingerprints (the same applies for other biometrics).

The first threshold can be predetermined so as the BPCER of the PAD device is close to zero, for example less than 5%, and preferably less than 3%. Compared to a PAD device 100 comprising only a single fingerprint classification module 130, addition of the fingerprint set classification module 110 allows to improve the APCER of the PAD device 100 without increasing its BPCER.

Indeed, APCER is higher for single fingerprint classification (performed by the single fingerprint classification module 130), than for a whole set of fingerprints.

Figure 3 shows the steps of a PAD method according to some embodiments of the invention, which can be carried out by the PAD device 100 described above.

At step 300, a set of N fingerprints is obtained by the fingerprint set classification module 110. The set of N fingerprints can be received from the fingerprint capture device 120, as previously described.

At step 301, at least one feature (for example a feature vector) is extracted by the fingerprint set classification module 110 from each of the fingerprint of the set of N fingerprints. Step 301 can be carried out by the feature extraction modules 111.1-111.N as previously described.

At step 302, the fingerprint set classification module 110 determines at least one relationship value for the set of N fingerprints, based on the extracted features. For example, for each pair of fingerprints (or for each subset of M fingerprints) of the set of N fingerprints, a pair-wise (or an M-wise) relationship value (or a vector of pair-wise relationship values) is determined based on the respective features of the fingerprints of the pair and by applying the above described comparison function to these respective features. Step 302 can be carried out by the relationship module 112 as previously described.

At step 303, the fingerprint set classification module 110 determines the relationship score based on the at least one relationship value at step 302. For example, the relationship score can be determined by the classification module 113 based on the above described score function.

At step 304, the fingerprint set classification device 110 determines the first classification based on the relationship score determined at step 303, for example by comparing the relationship score with the first threshold. This step can be performed by the classification module 113 described above.

At step 305, the single fingerprint classification module 130 receives a single fingerprint from a set of N fingerprints, and determines a second classification for the received single fingerprint, as detailed above. For example, the module 130 may implement a single fingerprint classification model.

At step 306, the single fingerprint classification module 130 determines whether there is at least one fingerprint of the set for which step 305 has not been performed yet. If yes, step 305 is performed for a next fingerprint of the set. If no, i.e. if a second classification has been obtained for every fingerprint of the set, the method goes on with step 307.

Steps 305 and 306 are optional according to the invention, as the PAD device 100 may not comprise the single fingerprint classification module 130.

At step 307, the decision module 140 determines a decision, comprising at least a final classification, based on the first classification obtained at step 304, and optionally based on the N second classifications obtained at the different iterations of step 305. The decision may be determined based on the fusion function described above.

At step 308, the decision determined by the PAD device 100 may be transmitted to the external entity, as described above.

As explained above, the method according to the invention has been described by referring to fingerprints, but it more generally applies to any set of biometrics, such as any combination of iris, palm, ears, vein, etc.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A presentation attack detection method comprising:
- obtaining (300) a set of N biometrics, N being an integer equal to or greater than 2;
- for each biometric of the set, extracting (301) at least one feature of the biometric;
- determining (302) at least one relationship value for the set of N biometrics by applying a comparison function to the extracted features;
- determining (303) a relationship score based on the at least one relationship value, the relationship score being representative of a genetical relationship between the biometrics of the set;
- determining (304) a first classification of the set of N biometrics based on the obtained relationship score, the first classification indicating that the set of N biometrics is genuine or that the set of N biometrics is a presentation attack.

2. The method according to claim 1, further comprising:
- determining (305), for each biometric of the set, a second classification indicating whether the biometric is genuine or fake;
- determining (307) a decision based on the first classification and the N classifications, the decision comprising at least a final classification indicating that the set of N biometrics is genuine or that the set of N biometrics is a presentation attack.

3. The method according to claim 1 or 2, wherein N is greater than 2 and a relationship value is determined (302) for each subset of M biometrics in the set of N biometrics, M being comprised between 2 and N-1, based on the features extracted (301) for the biometrics of the subset.

4. The method according to claim 3, wherein, for each subset of M biometrics, the relationship value is determined (302) by applying a comparison function to the features extracted for the biometrics of the subset.

5. The method according to one of claims 1 to 4, wherein the first classification (304) is determined based on a comparison between the relationship score and a first threshold.

6. The method according to one of claims 1 to 5, wherein the set of N biometrics comprises N fingerprints.

7. The method according to claim 6, wherein the set of N biometrics comprises N fingerprints of different fingers (201-204; 211-214) of a same hand (200; 210).

8. The method according to claim 5, wherein N is equal to 2 and the set of N biometrics comprises a fingerprint of a right finger and a fingerprint of a corresponding left finger.

9. The method according to one of claims 6 to 8, wherein the at least one feature extracted (301) for each fingerprint comprises one or several of the following features:
- a color feature derived from a color histogram;
- an image quality feature; and/or
- an information derived from ridges of the fingerprint.
- at least one texture feature among local binary pattern, Gabor features, deep features and/or gray-level co-occurrence matrices.

10. A computer program comprising instructions arranged for implementing the method according to one of the preceding claims, when said instructions are executed by a processor.

11. A presentation attack detection device (100) comprising a fingerprint set classification module (110) with at least one processor for:
- receiving a set of N biometrics, N being an integer equal to or greater than 2;
- for each biometric of the set, extracting at least one feature of the biometric;
- determining at least one relationship value for the set of N biometrics by applying a comparison function to the extracted features;
- determining a relationship score based on the at least one relationship value, the relationship score being representative of a genetical relationship between the biometrics of the set;
- determining a first classification of the set of N biometrics based on the obtained relationship score, the first classification indicating that the set of N biometrics is genuine or that the set of N biometrics is a presentation attack.
